# EUROPÄISCHE PATENTANMELDUNG

(11) **EP 1 075 888 A1**
(43) Veröffentlichungstag der Anmeldung: **14.02.2001**
(21) Anmeldenummer: 00116656.0
(22) Anmeldetag: 02.08.2000
(51) Int. Cl.: B23B 51/10

(54) **Miniatur-Entgratwerkzeug**

(30) Priorität: 13.08.1999 DE 19938512
(71) Anmelder: Heule, Ulf, 9436 Balgach (CH)
(72) Erfinder: Heule, Heinrich, 9434 AU/SG (CH); Lippuner, Werner, 9436 Balgach (CH)
(74) Vertreter: Riebling, Peter, Dr.-Ing.

(57) **Zusammenfassung**

Die vorliegende Erfindung beschreibt ein Miniatur-Entgratwerkzeug zum Entgraten von Bohrungen mittels eines stiftförmigen Werkzeuges in dem ein Entgratmesser radial verschieblich angeordnet ist.

## Beschreibung

Die Erfindung betrifft ein Miniatur-Entgratwerkzeug nach dem Oberbegriff des Anspruchs 1. Entgratwerkzeuge der allgemeinen Art sind mit vielfältigen Erfindungen des Anmelders bekanntgeworden. Über Zweck und Einsatzbereich derartiger Entgratwerkzeuge wird auf die veröffentlichten Anmeldungen des gleichen Anmelders hingewiesen, deren Offenbarungsgehalt voll inhaltlich von der vorliegenden Offenbarung umfaßt sein soll.

Mehr und mehr besteht das Bedürfnis, auch relativ kleine Bohrungsdurchmesser zu entgraten, wofür es bisher noch keine geeigneten Entgratwerkzeuge gibt.

Bei derartigen Miniatur-Entgratwerkzeugen kommt es darauf an, mit möglichst wenig Teilen eine Miniaturisierung zu erreichen und dabei aber dafür zu sorgen, daß derartige Entgratwerkzeuge noch leicht bedienbar und auch zerlegbar sind.

Wesentlich bei allen Entgratwerkzeugen ist, daß in einem etwa zylindrischen Körper am unteren Ende in einer Art von Fenster mindestens ein Entgratmesser angeordnet ist, welches radial zur Längsachse des Werkzeuges verschiebbar ist und federbelastet in diesem Fenster gehalten wird.

Als Federelement zur federnden Vorspannung dieses radial im Fenster verschiebbaren Messers ist es bei einer Konstruktion der US-Firma Cogsdil bekannt, als Federelement eine einseitig eingespannte Biegefeder zu verwenden, deren freies Ende an dem Messer angreift und dieses Messer entsprechend in der fensterartigen Öffnung des Körpers vorspannt.

Allerdings ist bei dieser bekannten Konstruktion die Biegefeder und das Messer als ein Teil ausgebildet, wodurch der Nachteil besteht, daß das Messer nicht aus einem speziellen Hartmetall gemacht werden kann. Weil eine aus Hartmetall gefertigte Feder kein Federungsvermögen hat, so daß also spezielle Materialien für das Messer nicht verwendet werden können.

Außerdem ist der Austausch der Teile relativ kostspielig, weil ja immer nur das Messer mit dem daran befestigten Biegeelement (Federelement) ausgewechselt werden kann.

Bei der bekannten Konstruktion besteht im übrigen der Nachteil, daß das Messer insgesamt schwenkbar um den Schwenkpunkt der Biegefeder (Einspannpunkt der Biegefeder) gelagert ist, was dazu führt, daß das Messer insgesamt mit seinen Schneidkanten eine etwa halbkreisförmige Bewegung im Messerfenster ausführt. Damit besteht aber der Nachteil einer ungünstigen Führung des Messers im Messerfenster und dieses Messer neigt zum Schwingen und Vibrieren beim Entgraten von Bohrungen.

Weiterer Nachteil ist, daß die Entgratgeometrie nicht gut beherrscht werden kann, weil das Messer eben nicht gradlinig im Messerkörper verschoben wird, sondern auf einem Halbkreis schwenkt.

Im übrigen bestehen Nachteile bezüglich der Abmessungen des bekannten Körpers des Entgratmessers. Es ist ein relativ großer Messerdurchmesser im Bereich der Halterung der Biegefeder bei dem bekannten Entgratwerkzeug notwendig.

Der Erfindung liegt deshalb die Aufgabe zugrunde, ein Miniatur-Entgratwerkzeug der eingangs genannten Art so weiterzubilden, daß eine bessere Messerführung im Körper des Werkzeuges gewährleistet ist und daß das Messer unabhängig von der verwendeten Biegefeder ausgetauscht und verwendet werden kann.

Zur Lösung der gestellten Aufgabe ist die Erfindung durch die technische Lehre des Anspruches 1 gekennzeichnet.

Wesentliches Merkmal der Erfindung ist, daß in einem etwa stiftförmigen Körper ein Längsschlitz zur Aufnahme eines Federelementes ausgebildet ist, welches in dem Längsschlitz aufgenommen ist und daß das Federelement als einseitig eingespannte Biegefeder mit seinem unteren, freien und biegbaren Ende in eine Ausnehmung in mindestens ein Messer eingreift, welches in einem radial angeordneten Fenster des Körpers, welche Fensterachse etwa senkrecht zur Längsmittenachse des Werkzeuges ist.

Die vorliegende Erfindung ist demgemäß nicht auf die Verwendung eines einzigen Schneidmessers mit einem einzigen Federelement beschränkt, sondern in einer Weiterbildung der Erfindung kann es vorgesehen sein, daß zwei parallel aneinander anliegende Messer, die wahlweise mit ihren Schneidkanten gegeneinander gestellt sind, von jeweils einem zugeordneten Federelement mit einer Führungskraft beaufschlagt sind.

Statt einem einzigen Federelement sind dann zwei parallel zueinander angeordnete Federelemente in dem stiftförmigen Körper des Werkzeuges vorhanden und jeweils eingespannt und greifen mit ihrem jeweiligen unteren, biegbaren Federende in jeweils ein Schneidmesser ein, wobei das eine Biegeelement das eine Schneidmesser in der einen Richtung und das andere Biegeelement das Schneidmesser in der anderen Richtung federnd vorspannt.

Der Einfachheit halber wird in der folgenden Beschreibung jedoch lediglich die Verwendung eines einzigen Schneidmessers in Verbindung mit einem einzigen Federelement beschrieben, obwohl die Erfindung hierauf nicht beschränkt ist. Bei den Ausführungsformen mit zwei Messern ist die Funktionsweise entsprechend.

Wichtig ist bei der vorliegenden Erfindung auch, daß das Federelement mit seinem unteren, der Einspannseite gegenüberliegenden Ende in eine entsprechende Ausnehmung im Messer eingreift und dort an einer Anschlagkante einseitig kraftschlüssig anliegt, so daß das Messer stets in Arbeitsposition federnd vorgespannt aus dem Körper des Entgratwerkzeuges herausgedrückt wird.

Das heißt also, in der Arbeitsposition wirkt stets eine Federvorspannung auf das aus dem Fenster des Entgratwerkzeuges herausragenden Messers. Sobald dieses Messer nun mit seiner Schneidkante in eine Bohrung einfährt, wird diese Federkraft überwunden und das Messer weicht radial einwärtsgerichtet in das Fenster des Entgratwerkzeuges zurück.

Die federnde Vorspannung des Messers hat den Vorteil, daß dieses Messer auch bei hohen Umdrehungszahlen des Entgratwerkzeuges nicht vibriert, weil es eben federnd vorgespannt ist.

Außerdem werden Vibrationen schon deshalb vermieden, daß eine absolut gradlinige Führung in dem Fenster am unteren Ende des Entgratwerkzeuges gegeben ist, so daß das Messer also nur gradlinig in diesem Fenster verschoben werden kann und durch relativ enge Führungsschlitze begrenzt wird, so daß das Spiel in diesem Fenster auf ein Minimum reduziert wird.

Im übrigen spielt die Formgebung des Messers selbst keine Rolle; im vorliegenden Ausführungsbeispiel wird beispielsweise ein Messer mit einer oberen und einer unteren Schneidkante beschrieben. Hierauf ist die Erfindung jedoch nicht beschränkt. Es können auch sog. Rundmesser verwendet werden, die eine in sich runde oder halbrunde Schneidkante aufweisen. Die Formgebung ist also relativ beliebig .

Vorteil der Anordnung ist, daß nun das Federelement selbst aus einem Federstahl mit hoher Lebensdauer gefertigt werden kann, so daß also eine relativ hohe Federkraft auf das Messer in Richtung seiner Messervorspannung erzeugt werden kann.

Weiterer Vorteil ist, daß nun das Messer auswechselbar in dem Fenster gehalten ist und daß dadurch das Messer aus beliebigen Werkzeugstählen hergestellt werden kann oder aus Hartmetall, d. h. also aus einem anderen Material als das Federelement besteht.

Die Auswechslung der gesamten Anordnung geht relativ einfach und rasch vonstatten, weil mit einer einfachen Halterung des Federelementes dieses aus dem Messerkörper herausgezogen werden kann, wodurch der Eingriff des Federelementes in dem Schneidmesser aufgehoben wird und das Schneidmesser dann einfach aus seiner fensterartigen Öffnung im Körper herausfällt.

Zur erneuten Montage kann das Federelement direkt mit dem Messer zusammengesetzt werden und beide Teile können in zusammengesetztem Zustand in die zugeordneten Schlitzausnehmungen bzw. Fenster eingeschoben werden. Die Montage ist deshalb besonders einfach und schnell.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert teilweise im Schnitt ein Entgratwerkzeug nach der Erfindung;
- Figur 2:: die Seitenansicht des Entgratwerkzeuges nach Fig. 1 in Richtung des Pfeiles II;
- Figur 3:: eine andere Ausführungsform der Halterung des Federelementes;
- Figur 4:: vergrößerte Darstellung des unteren Teils des Entgratwerkzeuges teilweise im Schnitt;
- Figur 5:: eine vergrößerte Darstellung einer anderen Ausführungsform der Messerhalterung und Führung.
- Figuren 6-11:: verschiedene Ausführungsformen eines Anschlags für das Messer;
- Figur 12:: eine weitere Ausführungsform der Biegefeder als gewundene Feder.

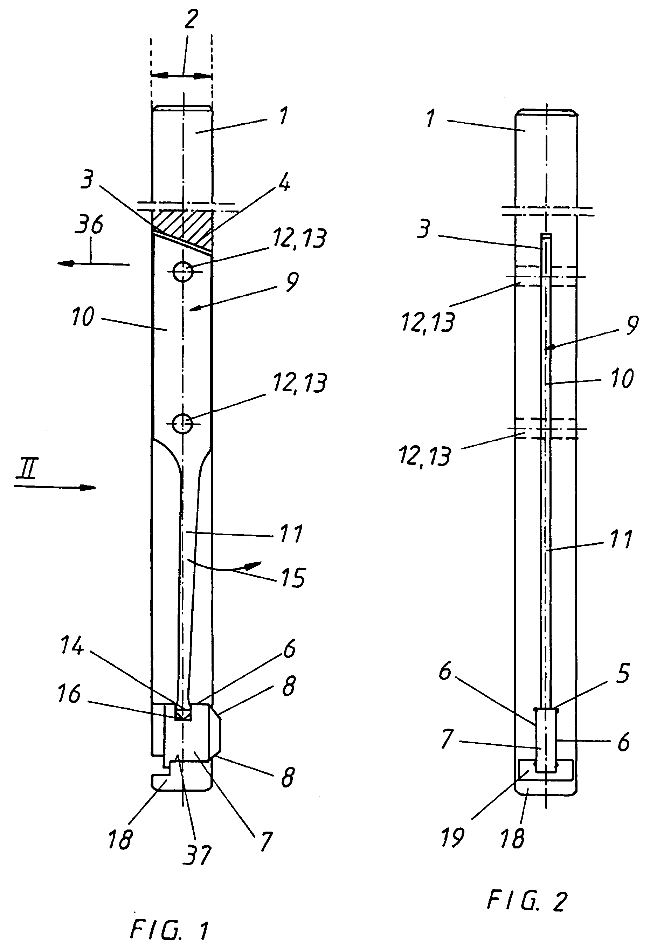

In Fig. 1 ist schematisiert ein Körper 1 eines Entgratwerkzeuges dargestellt. Dieser Körper ist z. B. als Zylinderstift ausgebildet. Er kann auch jede beliebige andere Profilform aufweisen, z. B. ein mehreckiges Profil, ein elyptisches Profil oder dgl. aufweisen.

In einem bevorzugten Ausführungsbeispiel weist der Durchmesser 2 dieses Körpers einen Durchmesser im Bereich von 4 mm bis 1 mm auf.

In dem Körper 1 ist ein Schlitz 3 eingefräst, welcher sich von der einen Seite des Körpers 1 bis zur anderen Seite erstreckt, d. h. also durchgehend ausgebildet ist.

Der Schlitz erstreckt sich mit seiner Unterkante bis zu einem Ende 5, welches der Beginn eines Fensters 6 definiert, welches Fenster als Querschlitz in den unteren Teil des Körpers 1 eingearbeitet ist.

In diesem Fenster 6 ist ein Messer 7 in radialer Richtung geradlinig verschiebbar und federbelastet gehalten.

In den Schlitz 3 ist ein Federelement 9 eingesetzt, welches mit Hilfe von Stiften 12 gehalten ist, welche entsprechende Bohrungen 13 in dem Körper und in dem Federelement 9 durchsetzen.

Das Federelement 9 besteht aus einem werkstoffeinstöckigen Teil aus einem Federstahl, wobei das Oberteil 10 dicker ausgebildet ist als das Unterteil 11, welches somit als einseitig eingespannte Biegefeder wirkt.

Dieses Unterteil 11 übt also in Pfeilrichtung 15 eine ständig vorhandene Vorspannungs- oder Federkraft auf das Schneidmesser 7 aus, welches damit gem. Fig. 1 aus seiner fensterartigen Öffnung aus dem Körper 1 herausgedrückt wird.

Die beiden einander gegenüberliegenden und schräg zueinander gerichteten Schneidkanten 8 sind damit für den Eingriff am Bohrungsrand einer Bohrung bestimmt.

Damit das Federelement 9 in richtiger Lage montiert bzw. ausgewechselt werden kann, ist seine Oberkante abgeschrägt ausgebildet, welcher eine entsprechende Schlitzschräge 4 am Dach des Schlitzes 3 gegenüberliegt. Auf diese Weise kann das Federelement 9 nur von der linken Seite in Fig. 1 in den Schlitz 3 eingeschoben werden, nicht aber von der rechten Seite.

Dies verhindert eine Fehlmontage des Federelementes 9 im Schlitz 3.

Zur Montage bzw. Demontage des Federelementes können daher einfach die Stifte 12 aus den Bohrungen 13 entfernt werden, wodurch das Federelement 9 lose kommt und eben in Pfeilrichtung 36 aus dem Schlitz 3 entfernt werden kann. Die Verbindung zwischen dem Federelement 9 und dem stiftförmigen Körper wird also durch die etwa senkrecht im stiftförmigen Körper angeordneten Stifte 12, 13 bewerkstelligt, welche das Federelement im stiftförmigen Körper fixieren.

Damit kommt auch das Unterteil 11 außer Eingriff mit der Ausnehmung 16 im Messer 7 und das Messer kann somit ebenfalls in Pfeilrichtung 36 aus seinem Fenster 6 entfernt werden. Für den Montagevorgang gilt entsprechendes.

Das Fenster 6 ist als Längsschlitz in dem Körper 1 in Fortsetzung des Schlitzes 3 eingearbeitet, wobei die Fensterbreite des Fensters 6 größer ist als die Breite des Schlitzes 3, wie sich in Fig. 2 ergibt.

Die Unterkante 37 des Fensters 6 wird hierbei definiert durch ein Fußteil 18 des Körpers 1, welches Fußteil die Stirnseite des Körpers 1 bildet.

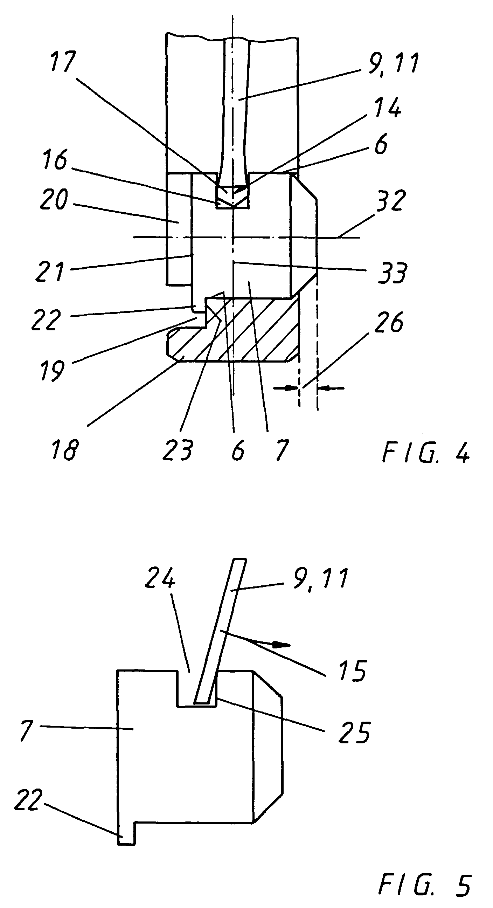

Das Messer hat an seiner hinteren Seite gern. Fig. 4 eine nach unten ragende Anschlagnase 22, die an einer Anschlagkante 23 des Fußteils 18 des Körpers 1 zur Anlage kommt.

Auf diese Weise wird verhindert, daß das Messer in Pfeilrichtung 15 aus dem Fenster 6 bedingt durch die Federkraft des Federelementes 9 herausgeschoben wird. Es ist damit seine äußere maximale Ausschubposition definiert.

Wie aus Fig. 4 besser ersichtlich, ist das Unterteil 11 des Federelementes 9 in der Art eines Gelenkfußes 14 ausgebildet, d. h. es hat ein etwa kalottenförmiges Kugelteil 17, welches in die Ausnehmung 16 im Messer eingreift.

Es findet allerdings in der angegebenen Größendimension des Werkzeuges lediglich ein Messerverstellweg 26 im Bereich von etwa 3/10 mm statt.

Hieraus ergibt sich, daß die Ausbildung als Kugelteil 17 nicht unbedingt und zwingend notwendig ist, es erleichtert nur die Führung des Messers 7 in dem Fenster 6.

Hierzu zeigt die Fig. 5 eine alternative Ausführungsform, aus der erkennbar ist, daß das Oberteil auch schmäler ausgebildet sein kann und lediglich federbelastet an der rechten Anschlagkante 25 im Bereich einer anders gestalteten Ausnehmung 24 anliegen kann. Das heißt also, die Art und Ausbildung der Ausnehmung 24 ist für den erfindungsgemäßen Erfolg nicht wesentlich, weil statt der engeren Ausnehmung 16 auch eine weiter ausgebildete Ausnehmung 24 vorgesehen werden kann, weil nur an der einen Anschlagkante 25 das Federelement 9 federbelastet anliegen muß, während die gegenüberliegende Anschlagkante keine Rolle spielt.

Im übrigen ist aus Fig. 4 in Verbindung mit Fig. 2 zu entnehmen, daß die Anschlagkante 22 des Messers 7 im Bereich eines Querschlitzes 19 des Fensters wirkt.

Senkrecht an diesen Querschlitz schließt sich ein Längsschlitz 20 an, welcher die hintere Stirnseite des Fensters 6 definiert.

Die Hinterkante 21 dieses Messers ist also im Bereich des Fensters 6 und im Bereich dieses Längsschlitzes 20 in radialer Richtung verschiebbar (natürlich zusammen mit dem gesamten Messer).

Die Hinterkante 21 sollte jedoch nicht über die äußere, radiale Begrenzung des Längsschlitzes 20 hinausragen, weil ansonsten das Messer 7 aus der hinteren Seite des Fensters 6 heraustritt.

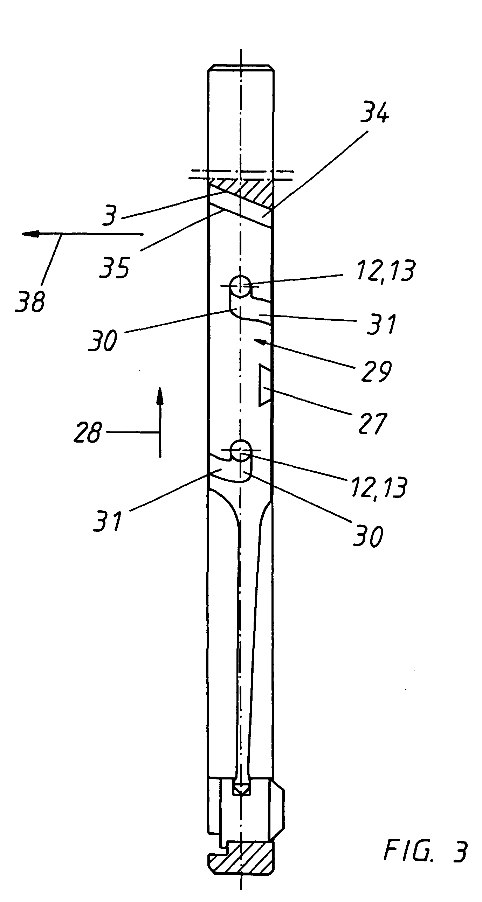

In Fig. 3 ist eine andere Ausgestaltung einer Halterung eines Federelementes 29 dargestellt, wobei für die übrigen Teile die gleichen Funktionen gelten.

Es wird daher nur die Halterung des Federelementes 29 beschrieben. Dieses ist schnell auswechselbar dadurch gehalten, daß wiederum in dem Körper 1 in entsprechenden Bohrungen zwei übereinanderliegende Stifte 12 eingepresst sind, welche Stifte sich in jeweils einen einseitig begrenzten Längsschlitz 30 anlegen. Dieser Längsschlitz 30 geht in einen schräg dazu und in diesen mündenden Querschlitz 31 über, welcher nach außen hin offen ist.

Wird nun mit einem entsprechenden Werkzeug in die Öffnung 27 am Federelement 29 eingegriffen und dieses in Pfeilrichtung 28 nach oben geschoben, dann gelangt der Stift 12 zunächst einmal in den unteren Teil des Längsschlitzes 30, weil das gesamte Federelement 29 mit seiner angeschrägten Oberkante 35 im Bereich der Freistellung 34 nach oben verschoben werden kann.

Sobald der Stift 12 im Bereich des Querschlitzes 31 kommt, kann das Federelement 29 in Pfeilrichtung 38 aus dem Schlitz 3 herausgeschwenkt werden.

Damit kann das gesamte Schneidmesser ebenfalls in Pfeilrichtung 38 nach hinten aus dem Fenster 6 herausgezogen werden und die beiden genannten Teile können zusammen aus dem Körper 1 entfernt werden.

Die Montage erfolgt in umgekehrter Richtung.

Das heißt also, dass das Federelement 9 in seinem Befestigungsbereich ineinander übergehende Schlitze 30, 31 aufweist, die entsprechenden Stiften 12 welche in Bohrungen 13 im stiftförmigen Körper 1 angeordnet sind zwecks Befestigung zugeordnet sind. Die Befestigung des Federelementes 9 erfolgt durch einfaches Einschieben in den Schlitz 3, anschließendes Verschwenken mit nachfolgendem axialem Verschieben in Richtung zum Messer 7 hin.

Statt der hier dargestellten Halterung des Federelementes 9, 29 kommen selbstverständlich auch andere Halterungen des Federelementes 9, 29 in Betracht, insbesondere auch nicht lösbare Halterungen. Beispielsweise kann das Federelement 9, 29 durch eine Punktschweißung im Schlitz 3 festgelegt werden oder durch eine Klebung.

Ebenso können Schrauben statt der hier erwähnten Stifte 12 verwendet werden.

In Fig. 4 ist noch dargestellt, daß sich die Achse des Fensters 6 und damit die Messerachse 32 senkrecht zur Längsmittenlinie 33 des gesamten Werkzeuges (Körper 1) erstreckt.

Hierauf ist die Erfindung nicht beschränkt.

Die Messerachse 32 kann auch einen Winkel zur Längsmittenlinie 33 bilden oder es ist in einer anderen Ausgestaltung möglich, daß die Messerachse 32 keine Gerade bildet, sondern eine gekurvte etwa halbrunde Linie, so daß das Messer deshalb dann nicht gradlinig in dem Fenster 6 verschiebbar ist, sondern entlang einer Schwenkbewegung.

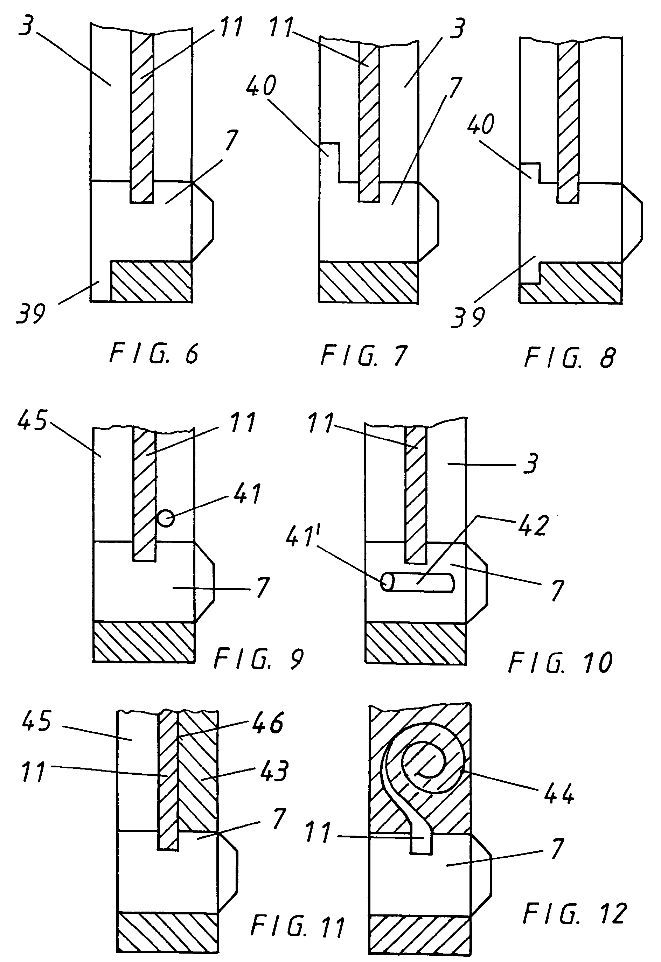

Bei der Figur 6 ist wesentlich, daß am hinteren Ende des Messers ein Anschlag 39 angeordnet ist, der am Grundkörper 1 des Werkzeuges anschlägt, um den Messervorschub nach vorne hin zu begrenzen. Es ist hier insgesamt ein durchgehender Längsschlitz 3 im Grundkörper 1 vorgesehen.

Gleiches gilt auch für die Figur 7, wo ebenfalls ein durchgehender Längsschlitz 3 im Messergrundkörper vorhanden ist, nur daß statt des Anschlages 39 der Ausführungsform der Figur 6 ein nach oben gerichteter Anschlag 40 am Messer angeformt ist, der ebenfalls an einer nicht näher dargestellten weiteren Anschlagfläche am Grundkörper 1 anschlägt.

Die Figur 8 zeigt die Verbindung der beiden Ausführungen der Figuren 6 und 7, so daß in Figur 8 zwei einander gegenüberliegende Anschläge 39, 40 vorhanden sind, die an zugeordneten, gehäusefesten Anschlägen im Grundkörper 1 zur Anlage bringbar sind.

Die Figur 9 zeigt eine weitere Modifikation, wo erkennbar ist, daß ein derartiger Anschlag auch durch einen gehäusefesten Anschlagstift 41 verwirklicht werden kann.

In Figur 10 ist zur Begrenzung der Verschiebung des Messers 7 noch als weitere Ausführungsform dargestellt, daß in dem Messer 7 ein Langloch 42 angeordnet ist, in welches ein gehäusefester Anschlagstift 41' eingreift.

Die Figur 11 zeigt im Vergleich zu Figur 9, daß der Anschlagstift 41 auch völlig entfallen kann und daß statt dessen ein einseitig vorhandener Längsschlitz 45 durch eine gehäusefeste Anschlagfläche 46 begrenzt ist. Der Längsschlitz 45, der vorher als durchgehender Längsschlitz 3 im Grundkörper 1 des Werkzeuges ausgebildet war, ist nun lediglich als einseitiger Längsschlitz 45 ausgebildet, so daß im Grundkörper 1 nun eine durchgehende Anschlagfläche 46 am geschlossenen Teil 43 des Grundkörpers 1 vorhanden ist.

Es ist also nicht lösungsnotwendig, einen im Grundkörper 1 durchgehenden Längsschlitz 3 auszubilden, so wie es die Figuren 1 bis 10 zeigen, sondern es reicht auch aus, einen einseitig im Grundkörper 1 eingebrachten Längsschlitz 45 durch eine etwa senkrechte Anschlagfläche 46 zu begrenzen.

Die Figur 12 zeigt, daß das Federelement nicht nur eine gerade Biegefeder sein muß, sondern das Federelement 44 kann auch eine gewundene Biegefeder sein, wobei ebenfalls das Federende 11 als freies, federndes Ende in das Messer 7 eingreift.

### Zeichnungslegende

- 1.: Körper
- 2.: Durchmesser
- 3.: Schlitz
- 4.: Schlitzschräge
- 5.: Ende
- 6.: Fenster
- 7.: Messer
- 8.: Schneidkante
- 9.: Federelement
- 10.: Oberteil
- 11.: Unterteil
- 12.: Stift
- 13.: Bohrung
- 14.: Gelenkfuß
- 15.: Pfeilrichtung
- 16.: Ausnehmung
- 17.: Kugelteil
- 18.: Fußteil
- 19.: Querschlitz
- 20.: Längsschlitz
- 21.: Hinterkante (Messer 7)
- 22.: Anschlagnase
- 23.: Anschlagkante
- 24.: Ausnehmung
- 25.: Anschlagkante
- 26.: Messerverstellung (∼ 3/10 mm)
- 27.: Öffnung
- 28.: Pfeilrichtung
- 29.: Federelement
- 30.: Längsschlitz
- 31.: Querschlitz
- 32.: Messerachse
- 33.: Längsmittenlinie
- 34.: Freistellung
- 35.: Oberkante
- 36.: Pfeilrichtung
- 37.: Unterkante
- 38.: Pfeilrichtung
- 39.: Anschlag
- 40.: Anschlag
- 41.: Anschlagstift
- 42.: Langloch
- 43.: geschlossener Teil von 1
- 44.: Federelemente
- 45.: Längsschlitz
- 46.: Anschlagfläche

## Patentansprüche

1. Miniatur-Entgratwerkzeug bestehend aus einem etwa stiftförmigen Grundkörper mit entlang seiner Längsachse angeordnetem, in etwa quer zu dieser Längsachse radial in einem Fenster beweglichem Entgratmesser, **dadurch gekennzeichnet, dass** in dem etwa stiftförmigen Körper (1) ein Längsschlitz (3;45) zur Aufnahme wenigstens eines Federelementes (9, 29;44), welches jeweils ein zugeordnetes Entgratmesser (7) im Fenster (6) etwa radial federnd fixiert, ausgebildet ist.

2. Miniatur-Entgratwerkzeug nach Anspruch 1, **dadurch gekennzeichnet**, dass der Längsschlitz (3) den Grundkörper (1) in radialer Richtung mindestens teilweise entlang der Längsachse durchbricht.

3. Miniatur-Entgratwerkzeug nach Anspruch 1, **dadurch gekennzeichnet**, dass der Längsschlitz (45) den Grundkörper (1) in radialer Richtung mindestens teilweise entlang der Längsachse nicht durchbricht.

4. Miniatur-Entgratwerkzeug nach einem der Ansprüche 1 bis 3, **dadurch gekennzeichnet, dass** das Federelement (9, 29;44) als einseitig eingespannte Biegefeder mit seinem unteren, freien und biegbaren Ende in eine Ausnehmung (16, 24) in einem zugeordnetem Messer (7) eingreift.

5. Miniatur-Entgratwerkzeug nach einem der Ansprüche 1 bis 4, **dadurch gekennzeichnet, dass** das Federelement (9, 29;44) an seinem unteren Ende an einer Anschlagkante (25) einseitig kraftschlüssig in der Ausnehmung (16) im Messer (7) eingreift, so daß das Messer (7) stets in Arbeitsposition federnd vorgespannt aus dem Körper (1) des Entgratwerkzeuges herausgedrückt wird.

6. Miniatur-Entgratwerkzeug nach einem der Ansprüche 1 bis 5, **dadurch gekennzeichnet, dass** das Federelement (9, 29;44) aus einem Federstahl mit hoher Lebensdauer besteht.

7. Miniatur-Entgratwerkzeug nach einem der Ansprüche 1 bis 6, **dadurch gekennzeichnet, dass** das Messer (7) auswechselbar in dem Fenster (6) gehalten ist.

8. Miniatur-Entgratwerkzeug nach einem der Ansprüche 1 bis 7, **dadurch gekennzeichnet, dass** das Federelement (9, 29;44) aus einem werkstoffeinstückigen Teil besteht.

9. Miniatur-Entgratwerkzeug nach einem der vorigen Ansprüche, **dadurch gekennzeichnet, dass** das Oberteil (10) des Federelementes (9, 29;44) dicker ausgebildet ist als das Unterteil (11).

10. Miniatur-Entgratwerkzeug nach einem der vorigen Ansprüche, **dadurch gekennzeichnet, dass** das Unterteil (11) des Federelementes (9, 29;44) in der Art eines Gelenkfußes (14) ausgebildet ist.

11. Miniatur-Entgratwerkzeug nach einem der vorigen Ansprüche, **dadurch gekennzeichnet, dass** der Gelenkfuß (14) als ein etwa kalottenförmiges Kugelteil (17) ausgebildet ist, welches in die Ausnehmung (16) im Messer eingreift.

12. Miniatur-Entgratwerkzeug nach einem der vorigen Ansprüche, **dadurch gekennzeichnet, dass** das Unterteil (11) eine ständig vorhandene Vorspannungs- oder Federkraft auf das Schneidmesser (7) ausübt, welches damit aus der fensterartigen Öffnung aus dem Körper (1) herausgedrückt wird.

13. Miniatur-Entgratwerkzeug nach einem der vorigen Ansprüche, **dadurch gekennzeichnet, dass** das die Oberkante des Federelementes (9, 29;44) abgeschrägt ausgebildet ist.

14. Miniatur-Entgratwerkzeug nach einem der vorigen Ansprüche, **dadurch gekennzeichnet, dass** eine entsprechende Schlitzschräge (4) am Dach des Schlitzes (3;45) im stiftförmigen Körper (1) der Oberkante Federelementes (9, 29;44) des gegenüberliegt.

15. Miniatur-Entgratwerkzeug nach einem der vorigen Ansprüche, **dadurch gekennzeichnet, dass** Federelement (9, 29) bei der Montage im stiftförmigen Körper nur von einer Seite in den Schlitz (3) eingeschoben werden kann.

16. Miniatur-Entgratwerkzeug nach einem der vorigen Ansprüche, **dadurch gekennzeichnet, dass** die Verbindung zwischen dem Federelement (9, 29;44) und dem stiftförmigen Körper (1) durch die etwa senkrecht im stiftförmigen Körper (1) angeordneten Stifte (12, 13) erfolgt.

17. Miniatur-Entgratwerkzeug nach einem der vorigen Ansprüche, **dadurch gekennzeichnet, dass** das Messer (7) an seiner hinteren, der Schneideseite gegenüberliegenden Seite mindestens eine Anschlagnase (22;39;40) aufweist, die an einer Anschlagkante (23) des Fußteils (18) im Schlitz (3) des Körpers (1) zur Anlage kommt aufweist.

18. Miniatur-Entgratwerkzeug nach einem der vorigen Ansprüche, **dadurch gekennzeichnet, dass** das Messer (7) nur gradlinig im Fenster (6) verschoben werden kann und durch relativ enge Führungsschlitze begrenzt wird, so daß das Spiel in diesem Fenster auf ein Minimum reduziert wird.

19. Miniatur-Entgratwerkzeug nach einem der vorigen Ansprüche, **dadurch gekennzeichnet, dass** das Federelement (9, 29;44) nur in richtiger Lage montiert bzw. ausgewechselt werden kann,

20. Miniatur-Entgratwerkzeug nach einem der vorigen Ansprüche, **dadurch gekennzeichnet, dass** das Federelement (29) in seinem Befestigungsbereich ineinander übergehende Schlitze (30, 31) aufweist, die entsprechenden Stiften (12), welche in Bohrungen (13) im stiftförmigen Körper (1) angeordnet sind, zwecks Befestigung zugeordnet sind.
